**Europäisches Patentamt**

**European Patent Office**

**Office européen des brevets**

(19)

(11) Veröffentlichungsnummer : **0 445 795 B1**

(12) **EUROPÄISCHE PATENTSCHRIFT**

(45) Veröffentlichungstag der Patentschrift :
**19.07.95 Patentblatt 95/29**

(51) Int. Cl.$^6$ : **G01S 13/89,** G01S 13/48,
H01Q 21/08, H01Q 3/26

(21) Anmeldenummer : **91103459.3**

(22) Anmeldetag : **07.03.91**

(54) **Vorwärtssicht-Radar.**

(30) Priorität : **09.03.90 DE 4007611**

(43) Veröffentlichungstag der Anmeldung :
**11.09.91 Patentblatt 91/37**

(45) Bekanntmachung des Hinweises auf die
Patenterteilung :
**19.07.95 Patentblatt 95/29**

(84) Benannte Vertragsstaaten :
**FR GB IT**

(56) Entgegenhaltungen :
**DE-A- 3 540 808**
**IEEE 1986 NATIONAL AEROSPACE AND**
**ELECTRONICS CONFERENCE NAECON 86 ,**
**DAYTON , OH, USA ; IEEE Bd. 1, 19. Mai 1986,**
**NEW YORK , NY , USA Seiten 234 - 239 FRAN-**
**ZWITTE , DFVLR 'Oil slick detection with an**
**airborne SLAR'**

(73) Patentinhaber : **Deutsche Forschungsanstalt**
**für Luft- und Raumfahrt e.V.**
**Linder Höhe**
**Postfach 90 60 58**
**D-51126 Köln (DE)**

(72) Erfinder : **Witte, Franz**
**Anton-Happach-Strasse 19**
**D-8911 Pürgen-Lengenfeld (DE)**

(74) Vertreter : **von Kirschbaum, Albrecht, Dipl.-Ing.**
**Patentanwalt,**
**Postfach 15 20**
**D-82102 Germering (DE)**

## Beschreibung

Die Erfindung betrifft ein Vorwärtssicht-Radar zur zweidimensionalen Abbildung von Land- oder Meeresoberflächen einschließlich dort detektierbarer Objekte in einem vorausliegenden Sektorbereich nach dem Oberbegriff des Anspruchs 1.

Ein derartiges Vorwärtssicht-Radar ist aus DE 3 540 808 A1 bekannt.

Bei den heutigen flugzeuggetragenen, abbildenden Radarsystemen ergibt sich systembedingt eine Lücke im Nadirbereich, da mit solchen Systemen das überflogene Gelände oder Meer nur rechts und links vom Flugweg aufgenommen werden kann. Für eine lückenlose Radarabbildung des überflogenen Gebietes wird jedoch ein Sensor benötigt, der mit einer vergleichbaren Auflösung den bisher fehlenden Teil ausfüllt.

Bei vielen Meßaufgaben, wie beispielsweise bei der Messung von Meeresverschmutzungen, müßten verschiedene Sensoren miteinander kombiniert werden. Bei senkrecht nach unten ausgerichteten Sensoren, wie beispielsweise bei Radiometern, IR-Scannern u.ä., muß dann oft ein Flugzeug auch bei fehlender Bodensicht exakt über ein Gebiet geleitet werden. Hierzu wird jedoch ein abbildendes Radargerät benötigt, das im Flugzeug installiert ist und unabhängig von einer Bodenstation operieren kann, da eine Funknavigation - in Abhängigkeit von der geographischen Lage - entweder nur zu ungenau oder überhaupt nicht möglich ist.

Für die vorstehend angeführten Probleme stehen derzeit keine geeigneten Geräte zur Verfügung. Im Flugbetrieb werden jedoch Wetter-Radargeräte verwendet, die mit einem sogenannten "Ground mapping mode" arbeiten. Diese Geräte haben eine mechanisch verschwenkbare Antenne, so daß die geo- und radiometrische Auflösung systembedingt sehr gering ist.

Auch die eingangs angeführte Detektionslücke im Nadirbereich kann mit den vorhandenen Geräte nicht geschlossen werden. Ferner können die vorhandenen Geräte wegen ihrer geringen Auflösung nicht einmal als Navigationshilfe verwendet werden. Ein operationeller Betrieb, vor allem bei einer Verwendung in Flugzeugen, ist wegen des mechanischen Schwenkens der Antennen nicht möglich. Obendrein ist neben den mechanischen Schwierigkeiten hinsichtlich Gewicht, Volumen, Radom u.ä. die Wiederholrate zu gering.

Aufgabe der Erfindung ist es daher, unter weitgehender Vermeidung der vorstehend angeführten Nachteile ein Vorwärtssicht-Radar mit einer erheblich verbesserten Auflösung und einer wesentlich höheren Wiederholrate zu schaffen. Gemäß der Erfindung ist dies bei einem Vorwärtssicht-Radar zur zweidimensionalen Abbildung von Land- oder Meeresoberflächen in einem vorausliegenden Sektorbereich durch die Merkmale im kennzeichnenden Teil des Anspruchs 1 erreicht. Vorteilhafte Weiterbildungen der Erfindung sind Gegenstand des Unteranspruchs.

Gemäß der Erfindung ist eine relativ große, jedoch starr beispielsweise an einem fliegenden Träger, wie einem Flugkörper, einem Flugzeug, einem Hubschrauber u.ä. montierte Antenne vorgesehen, welche aus einer Anzahl geradlinig nebeneinander angeordneter Einzelelemente aufgebaut ist, und für einen inkohärenten Sender bestimmt ist, so daß sich vor allem in Verbindung mit einem "seitlich schauenden" kohärenten oder auch inkohärenten Radarsystem, wie dem SAR-(Synthetic Aperture Radar) oder SLAR-(Side Looking Airborne Radar) System technisch besonders vorteilhafte Einsatzmöglichkeiten ergeben. Bei der starr beispielsweise an einem Flugzeug montierten Antenne handelt es sich nicht um eine SWG-( Slotted Wave-Guide) Antenne oder um eine übliche "Phased Array Antenne", sondern es sind eine Anzahl Einzelelemente, vorzugsweise in Form von Hornantennen geradlinig nebeneinander angeordnet, welche dann so verwendet werden, daß eine ähnliche Verarbeitung, wie bei dem sogenannten SAR-Prinzip möglich ist. Beim SAR-Prinzip wird durch ein spezielles Aufnahme- und Datenverarbeitungsverfahren eine lange synthetische Antenne erzeugt, um eine hohe Winkelauflösung zu erhalten.

Aufgrund dieser Art einer Datenverarbeitung kann dann auch ohne eine Antennen- oder Flugbewegung, d.h. beispielsweise von einem stationären Träger, wie einem Turm, einem Schiffsmast u.ä. eine relativ gute Auflösung erreicht werden, die allerdings abhängig von der Antennenlänge ist.

Mit Hilfe eines solchen gemäß der Erfindung aufgebauten Radarsensors wird dann in Flugrichtung in einem bestimmten Sektor eine Land- oder Meeresoberfläche beleuchtet, die anschließend auf einem Monitor bildhaft dargestellt werden kann. Hierzu kann die Verarbeitung der Rohdaten mit einem Echtzeit-Prozessor gegebenenfalls bereits an Bord des Trägers, beispielsweise eines Flugzeugs, erfolgen. Der Radarsensor selbst kann auch als ein eigenständiger Sensor, beispielsweise für einen Hubschrauber oder auch im Verbund mit anderen Radarsensoren Verwendung finden.

Nachfolgend wird die Erfindung anhand von bevorzugten Ausführungsformen unter Bezugnahme auf die anliegenden Zeichnungen im einzelnen erläutert. Es zeigen:

Fig.1      eine schematische Darstellung einer aus einer Anzahl nebeneinander angeordneter Einzelstrahler aufgebauten Antenne gemäß der Erfindung;

Fig.2      eine schematische Darstellung einer Beleuchtungsgeometrie, wie sie sich von einem in einer vorgegebenen Flugrichtung fliegenden Flugzeug ergibt;

Fig.3 zum Teil in Form eines Blockschaltbildes ein Verarbeitungsschema zur Verarbeitung von Rohdaten, und

Fig.4 eine schematische Darstellung eines Blockdiagramms eines abbildenden Vorwärtssicht-Radars gemäß der Erfindung.

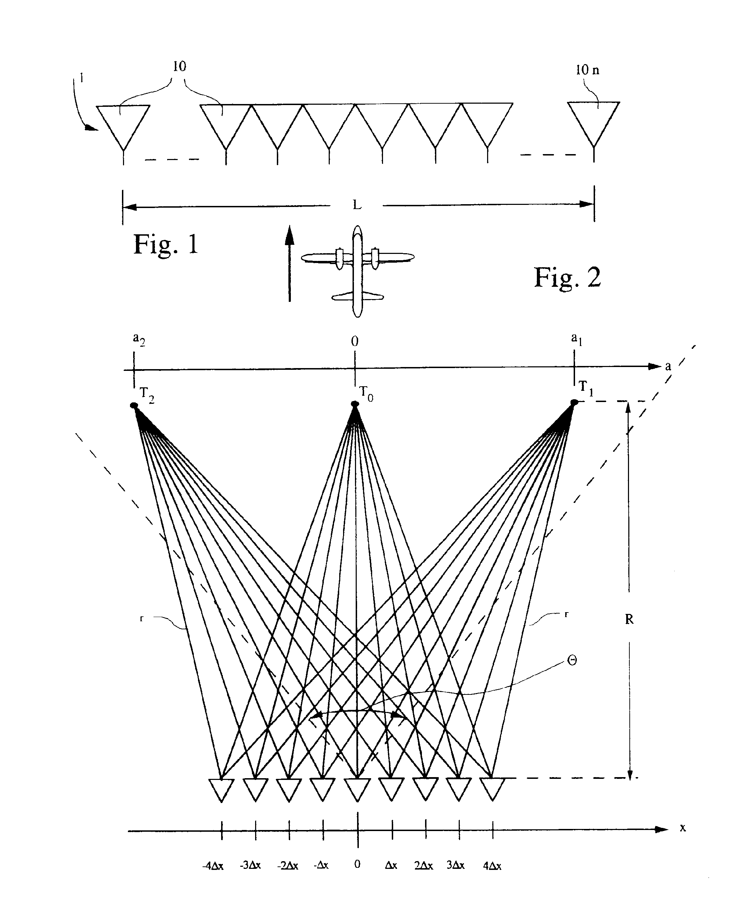

In Fig.1 sind schematisch n Einzelstrahler in Form von Horn-Antennen 10 einer Antennenanordnung 1 geradlinig nebeneinander angeordnet, welche, was im einzelnen nicht näher dargestellt ist, starr an einem - erheblich verkleinert wiedergegebenen - Flugzeug quer zu dessen durch einen Pfeil angezeigten Flugrichtung so angebracht sind, daß die Hauptabstrahlungsrichtung der Horn-Antennen 10 in Flugrichtung zeigt.

Hierbei wird nur von einem Einzelstrahler, d.h. nur von einer Horn-Antenne 10 aus gesendet; anschließend wird jedoch mit allen übrigen Einzelelementen in Form beispielsweise der Horn-Antennen 10 empfangen. Hierbei kann die Verarbeitung der Rohdaten in ähnlicher Weise wie bei dem vorstehend skizzierten SAR-Prinzip durchgeführt werden, wobei eine synthetische Aperturlänge L durch den halben Abstand zwischen dem ersten und n-ten Einzelstrahler der Hornantennenanordnung zu ersetzen ist. Es ist jedoch zu berücksichtigen, daß der Sende- und der Empfangsweg nicht gleich lang sind.

Bei der Verarbeitung wird das jeweilige Signal nach Amplitude und Phase in Abhängigkeit von der Entfernung mit einer nachstehend im einzelnen angegebenen, konjugiert komplexen Referenzfunktion korreliert. Entscheidend ist jedoch, daß das Empfangssignal an jedem Einzelelement 10 infolge des unterschiedlichen Ortes zwischen Sender und Empfänger eine andere Phase zum Sendepuls aufweist. Dies bedeutet, daß die Phasenbeziehung zwischen den Einzelelementen konstant und bekannt sein muß. Es ist jedoch nicht erforderlich, daß der Sender kohärent ist.

Wenn nunmehr der Abstand zwischen den n Einzelstrahlern 10 jeweils $\Delta x$ ist, kann dieser Abstand ausgedrückt werden durch

$$\Delta x = \ell = \frac{\lambda}{\theta}$$

wobei mit $\ell$ die Aperturlänge jedes Einzelstrahlers, mit $\lambda$ die Wellenlänge und mit $\theta$ der Beleuchtungswinkel bezeichnet sind, wobei der Beleuchtungswinkel $\theta$ in der in Fig. 2 schematisch wiedergegebenen Beleuchtungsgeometrie eingetragen ist. Wenn die Entfernung zwischen einem Zielpunkt T und einem Einzelstrahler 10 der Antennenanordnung mit r bezeichnet wird, läßt sich die Entfernung r, wie der schematischen Darstellung der Fig. 2 zu entnehmen ist, folgendermaßen ausdrücken:

$$r = \sqrt{R^2 + (a - x)^2}$$

wobei mit a der Abstand zwischen der Antennenmittenachse 0 und einem Punktziel T, mit x der Abstand zwischen der Antennenmittenachse 0 und einem Einzelstrahler 10 und mit R der Entfernungstor-Abstand bezeichnet sind, wie im einzelen der schematischen Darstellung der Fig. 2 zu entnehmen ist.

Ein Empfangssignal S kann dann als Funktion des Abstandes x folgendermaßen dargestellt werden:

$$S(x) = A \cdot e^{j\left[\frac{\pi}{\lambda} \cdot \frac{(a-x)^2}{R}\right]}$$

wobei mit A eine Amplitude des Empfangssignals S bezeichnet ist. Die bereits erwähnte Referenzfunktion läßt sich dann in Abhängigkeit von dem Abstand x folgendermaßen ausdrücken:

$$R(x) = e^{-j\left[\frac{\pi}{\lambda} \cdot \frac{(a-x)^2}{R}\right]}$$

Bei einer Korrelation muß jedoch berücksichtigt werden, daß in dem gesamten, beleuchteten Bereich für jeden Winkel eine entsprechende, eigene Referenzfunktion verwendet werden muß.

Als Korrelation des Empfangssignals S(x) und der Referenzfunktion R(x) ergibt sich somit:

$$P(k) = \int_{a-L/2}^{a+L/2} S(x) \cdot R(k+x)\ dx$$

$$P(k) = L \cdot A \cdot e^{j\frac{\pi k^2}{\lambda R}} \cdot \frac{\sin\frac{\pi kL}{\lambda \cdot R}}{\frac{\pi kL}{\lambda \cdot R}}$$

wobei mit P der Ausgangswert eines Prozessors, mit L die gesamte Aperturlänge zwischen dem ersten und n-ten Einzelstrahler 10 und mit k der Versatz der Referenzfunktion R(x) bei der Korrelation, d.h. der Versatz zwischen den Einzelstrahlern 10 ,bezeichnet sind.

Für eine Winkelauflösung an den sogenannten 3dB Punkten ergibt sich dann für einen Winkel $\varphi$ :

$$\varphi = 0,866 \cdot \frac{\lambda}{L}$$

Da die Korrelation bei jedem Radarpuls für den gesamten beleuchteten Bereich erfolgt, kann die Pulswiederholfrequenz (PRF) beliebig gewählt werden. Dies bedeutet, daß pro Radarpuls für jeden Winkelbereich eine eigene Korrelation durchgeführt wird, mit dem Ergebnis, daß der vollständige Sektor bei jedem Radarpuls dargestellt werden kann.

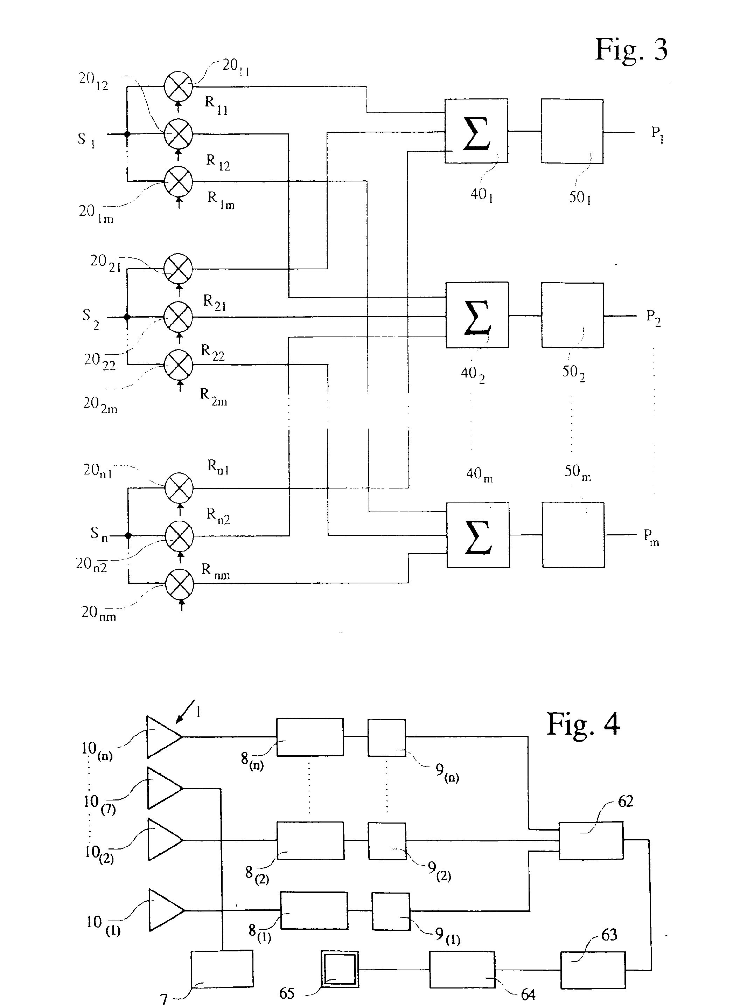

Die Verarbeitung von Rohdaten für ein Entfernungstor kann entsprechend einem in Fig.3 wiedergegebenen Verarbeitungsschema erfolgen. Jeder komplexe Empfangssignalwert $S_u$, wobei mit dem Index u eine Antennenelement-Zuordnung für u = 1 bis n und mit n die Anzahl der Einzelstrahler vorzugsweise in Form von Hornantennen 10 bezeichnet sind, wird jeweils an Multiplizierglieder $20_{uv}$ angelegt, wobei mit dem zweiten Index v eine Zuordnung des aufzulösenden Winkels für v = 1 bis m und mit m die Anzahl der aufzulösenden Winkel bezeichnet sind.

In den einzelnen Multipliziergliedern $20_{uv}$ wird der angelegte komplexe Empfangssignalwert $S_u$ hinsichtlich jedes Einzelstrahlers sowie des entsprechenden aufzulösenden Winkels mit einem Referenzfunktionswert $R_{uv}$ multipliziert. Hierbei gilt für den Referenzfunktionswert $R_{uv}$:

$$R_{uv} = \cos\varphi_{uv} - j\sin\varphi_{uv}$$

wobei für $\varphi_{uv}$ gilt:

$$\varphi_{uv} = \frac{\pi}{\lambda}\ \frac{\left[\left(v - \frac{m}{2}\right) \cdot \frac{\theta}{m} \cdot R - \left(u - \frac{n}{2}\right)\Delta x\right]^2}{R}$$

wobei mit $\lambda$ die Wellenlänge, mit $\theta$ ein Abbildungs bzw. Beleuchtungswinkel mit R wiederum der Entfernungstor-Abstand sowie mit $\Delta x$ wiederum der Abstand zwischen den Einzelstrahlern 10 bezeichnet sind.

Die durch Multiplikation gebildeten Ausgangswerte der Multiplizierglieder $20_{u1}$, $20_{u2}$,....., $20_{um}$ mit u = 1 bis n werden jeweils an zugeordnete Summiereinheiten $40_1$, $40_2$, .... $40_m$ angelegt, welchen wiederum Betrag bildende Einheiten $50_1$ $50_2$, .... $50_m$ nachgeschaltet sind, an deren Anschlüsse in Abhängigkeit von dem jeweils aufzulösenden Winkel die entsprechenden Bildpunkte $P_v$ mit v = 1 bis m abnehmbar sind.

Um die komplexen Empfangssignalwerte $S_u$ mit den entsprechenden Referenzfunktionswerten $R_{uv}$ korrelieren zu können, ist eine Kohärenz nur für den einzelnen Datensatz notwendig. Dies setzt jedoch voraus, daß die Phasenlage der Empfangselemente 10 zueinander bekannt sein muß; der Sender braucht hingegen nicht kohärent zu sein. Somit kann ein einfacher aber leistungsstarker Magnetronsender verwendet werden.

Da nicht nur eine einzelne Zeile, sondern jeweils ein ganzer Sektor dargestellt werden soll, muß für jede weitere Linie, welche einem anderen Winkel entspricht, eine andere Referenzfunktion verwendet werden.

Die Fluggeschwindigkeit eines das erfindungsgemäße Vorwärtssicht-Radarsystem mitführenden Trägers, beispielsweise eines Flächenflugzeugs oder eines Hubschraubers, ist für das Aufnahmeprinzip grundsätzlich ohne jede Bedeutung, oder mit anderen Worten, der erfindungsgemäße Vorwärtssicht-Radar ist für einen stationären sowie für einen mobilen Einsatz geeignet. Bei einem mobilen Einsatz, d.h. bei der Benutzung eines fliegenden Trägers, kann somit die Fluggeschwindigkeit zur Verbesserung des Ergebnisses durch eine Mittelung der einzelnen, verarbeiten Datensätze herangezogen werden.

Die Sendefolge, d.h. die Pulswiederholfrequenz (PRF) ist für das erfindungsgemäße Vorwärtssicht-Radar ohne irgendeine Bedeutung; allerdings muß sie der jeweiligen Meßfolge angepaßt sein. Ferner ist die Auflösung quer zur Flugrichtung des Trägers entfernungsabhängig, da erfindungsgemäß eine feste Antennenlänge mit n Einzelelementen verwendet ist. Hierbei ergeben sich dann im einzelnen die folgenden Werte:

| Auflösungswinkel ($\varphi$) | $0,88\ \dfrac{\lambda}{L}$ |
|---|---|
| Abstand Einzelelemente ($\Delta$x) | 1 |
| Anzahl Einzelelemente (n) | $\dfrac{L \cdot \Theta}{\lambda}$ |
| Antennenlänge (L) | $n \cdot 1$ |
| Anordnung der Einzelelemente | 1 Reihe |
| Anzahl der Referenz-funktionen* | $\dfrac{\Theta \cdot L}{2\lambda}$ |
| Kohärenz des Senders | keine |

Hierbei entspricht die mit einem * gekennzeichnete Anzahl der Referenzfunktionen einer für sinnvoll erachteten Mindestanzahl. Ferner hängt die Auflösung in Flugrichtung bzw. in der Abstrahlrichtung von der jeweiligen Pulslänge ab.

Nach der Verarbeitung müssen die Daten im allgemeinen in der Entfernungs-und der Azimut-Richtung geometrisch korrigiert werden. Zur Entfernungskorrektur wird jeder Punkt in Abhängigkeit von der Entfernung mit folgendem Faktor $F_r$ vergrößert:

$$F_r = \frac{1}{\cos\alpha}$$

wobei mit $\alpha$ der Depressionswinkel, d.h. der Winkel zwischen der Horizontalen und der Abstrahlungsrichtung bezeichnet ist. Zur Korrektur in Azimutrichtung wird jeder Punkt in Abhängigkeit von der Entferung mit folgendem Faktor $F_a$ vergrößert:

$$F_a = \frac{R}{R_1}$$

wobei mit R die Entfernung des zu korrigierenden Entfernungstors und mit $R_1$ die Entfernung des ersten Entfernungstors bezeichnet sind.

Um eine korrekte Darstellung eines Bildes zu erhalten, muß zur Entzerrung des jeweiligen Bildes zusätzlich folgende Bedingung erfüllt sein:

$$\frac{\Theta}{m} \cdot R = \frac{\delta_R}{\cos\alpha}$$

wobei $\delta_R$ die Abtastung in der gewählten Entfernung ist.

In Fig.4 ist ein Blockdiagramm eines abbildenden Vorwärtssicht-Radars gemäß der Erfindung dargestellt. Ein einziges Einzelelement, beispielsweise der Einzelstrahler $10_{(7)}$ der insgesamt n Einzelelemente 10 aufweisenden Antenne 1 ist mit einem Sender 7 verbunden, abgesehen von dem Einzelelement $10_{(7)}$ sind allen übrigen Einzelelementen 10 jeweils in Reihe ein Empfänger 8 sowie ein Analog-Digital-Umsetzer 9 nachgeordnet. Die Ausgänge der insgesamt (n-1) Analog-Digital-Umsetzer 9 werden an einen Prozessor 62 angelegt, dessen Ausgangswerte über einen Formatter 63 sowie einen Bildspeicher 64 auf einen Monitor 65 gebracht, auf welchem dann die aufgenommenen Bilddaten dargestellt werden können.

Gemäß der Erfindung lassen sich mit einem Vorwärtssicht-Radar mit einer starr montierten Antenne in Verbindung mit dem speziellen, vorstehend im einzelnen beschriebenen und nachgeordneten Verarbeitungsverfahren die folgenden Vorteile erzielen:

(a) eine hohe Schwenkgeschwindigkeit der Antennenkeule, da diese nicht mechanisch, sondern elektronisch mit Hilfe einer speziellen Datenverarbeitung realisiert ist;

(b) eine höhere Genauigkeit und dadurch eine bessere Qualität bei der Abbildung als mit den bisher verfügbaren Geräten;

(c) eine Unabhängigkeit von der Geschwindigkeit des Trägers, und

(d) erheblich geringere Wartungskosten.

Ein weiterer Vorteil ergibt sich dadurch, daß bei einer Kombination mit einem vorhandenen Seitensicht-Radar für das erfindungsgemäße Vorwärtssicht-Radar der gleiche Sender verwendet werden kann.

Der erfindungsgemäße Vorwärtssicht-Radar läßt sich auch in Verbindung mit Hubschraubern für Such-, Rettungs- und Umweltaufgaben einsetzen, da zur Anwendung des erfindungsgemäßen Vorwärtssicht-Radar keine Vorwärtsgeschwindigkeit erforderlich ist und die Eigenbewegung eines an einem vorgesehenen Ort "stehenden" Hubschraubers unerheblich ist.

Eine weitere Anwendungsmöglichkeit stellt die Verwendung des erfindungsgemäßen Vorwärtssicht-Radars in Verbindung mit Rundsicht-Radargeräten dar, wie beispielsweise bei Schiffsradar-oder Flughafen-Radaranlagen. Hierbei müssen jedoch mehrere Antennen verwendet werden, die entsprechend dem jeweiligen Anwendungszweck in einer ganz bestimmten geometrischen Anordnung zueinander installiert sein müssen. Bei Rundsicht-Radargeräten kann dies beispielsweise durch vier rechtwinklig zueinander angeordnete Antennen erreicht werden.

Darüber hinaus können mit dem erfindungsgemäßen Vorwärtssicht-Radar nicht nur Landoberflächen abgebildet werden, sondern das erfindungsgemäße Vorwärtssicht-Radar kann ebenso gut auch zur Detektion und Vermessung von Meeresverschmutzungen, wie beispielsweise Ölfilmen und entsprechende monomolekularen Filmen verwendet und eingesetzt werden.

## Patentansprüche

1. Vorwärtssicht-Radar zur zweidimensionalen Abbildung von Land- oder Meeresoberflächen einschließlich dort detektierbarer Objekte in einem vorauseiegenden Sektorbereich von fliegenden oder stationären Trägern aus, mit einer starr an dem Träger montierten Antenne (1) aus einer Anzahl n geradlinig nebeneinander angeordneter Einzelelemente (10), dadurch **gekennzeichnet**, daß

   die Antenne (1) so aufgebaut ist, daß bei einer vorgegebenen Aperturlänge $\ell$ jedes Einzelelements (10) und bei einem vorgegebenen Abstand ($\Delta$x) zwischen benachbarten Einzelelementen, der gleich der Aperturlänge $\ell$ ist, die Antenne (1) eine Antennenlänge L von L = n.$\ell$ aufweist,

   wobei ein Sender mit einem Einzelelement (10) verbunden ist und gesendet wird sowie anschließend bei bekannter Phasenlage der Einzelelemente (10) zueinander mit allen übrigen Einzelelementen (10) gleichzeitig empfangen wird,

   daß digitale Mittel zur gesonderten Auswertung jedes Einzelelements (10) vorhanden sind, und daß Korrelatoren für jeden Winkelbereich zur Durchführung einer digitalen Verarbeitung vorhanden sind, in denen jedes Empfangssignal mit einer speziellen Referenzfunktion R(x)) korreliert wird die im wesentlichen von einer Radarwellenlänge, einem Entfernungstor- Abstand und dem Abstand ($\Delta$x) zwischen den Einzelelementen abhängt.

2. Vorwärtssicht-Radar nach Anspruch 1, dadurch **gekennzeichnet**, daß die Einzelelemente als Hornantennen (10) ausgeführt sind.

## Claims

1. A forward looking radar for two-dimensional imaging of land or marine surfaces including objects detectable there in a forward lying sector region of flying or stationary carriers with an antenna (1) mounted rigidly on the carrier and made up of a plurality n of rectilinearly adjacently disposed individual elements (10), characterized in

   that the antenna (1) is constructed in such a manner that for a predetermined aperture length $\ell$ of each individual element (10) and for a predetermined distance ($\Delta$x) between adjacent individual elements which is equal to the aperture length $\ell$, the antenna (1) comprises an antenna length L of L = n · $\ell$,

   whereby a transmitter is connected to an individual element (10) and an incoherent transmission is effected by the individual element (10) and thereafter with known phase position of the individual elements (10) with respect to each other simultaneous reception is effected with all the other individual elements (10)

   that there exist digital means for a separate analysis of each individual element, and

   that there exist correlators for each angular region to carry out a digital processing in which correlators each reception signal is correlated with a specific reference function R(x), which depends substantially on a radar wavelength, a range gate distance and the distance ($\Delta$x) between the individual elements.

2. A forward looking radar according to claim 1, characterized in that the individual elements are configured as horn antennas (10).

**Revendications**

1. Radar de vue vers l'avant pour la formation d'images bidimensionnelles de surfaces terrestres ou marines, y compris les objets qui peuvent y être détectés dans une zone sectorielle disposée à l'avant de porteurs volants ou stationnaires, comprenant une antenne (1) montée rigidement sur le porteur et constituée par un nombre n d'éléments individuels (10) disposés les uns à côté des autres en ligne droite, caractérisé en ce que

l'antenne (1) est constituée de manière que, pour une longueur d'ouverture prédéterminée $\ell$ de chaque élément individuel (10) et pour un écartement prédéterminé ($\Delta$x) entre éléments individuels (10) voisins, qui est égal à la longueur d'ouverture $\ell$, l'antenne présente une longueur d'antenne L qui est de L = n.$\ell$,

un émetteur est relié à un élément individuel (10) et émet une onde qui est ensuite reçue simultanément par tous les autres éléments individuels (10) pour une position de phase connue des éléments individuels (10) les uns par rapport aux autres,

des moyens numériques sont prévus pour une évaluation particulière de chaque élément individuel (10), et

des corrélateurs sont prévus pour chaque zone angulaire pour la mise en oeuvre d'un traitement numérique, corrélateurs dans lesquels chaque signal de réception est mis en corrélation avec une fonction de référence spéciale (R(x)), qui dépend sensiblement d'une longueur d'onde du radar, de l'éloignement d'une porte de distance et de l'écartement ($\Delta$x) entre les éléments individuels.

2. Radar de vue vers l'avant selon la revendication 1, caractérisé en ce que les éléments individuels sont constitués sous forme d'antennes en cornet (10).

Fig. 1

Fig. 2

Fig. 3

Fig. 4